# EUROPEAN PATENT APPLICATION

(11) **EP 4 603 960 A1**
(43) Date of publication of application: **20.08.2025**
(21) Application number: 23894962.2
(22) Date of filing: 20.11.2023
(51) Int. Cl.: G06F 3/06

(54) **ELECTRONIC DEVICE, AND FILE SYSTEM OPERATING METHOD OF ELECTRONIC DEVICE**

(30) Priority: 21.11.2022 KR 20220156437; 06.12.2022 KR 20220168702
(71) Applicant: Samsung Electronics Co., Ltd., Suwon-si, Gyeonggi-do 16677 (KR)
(72) Inventor: KANG, Yunji, Suwon-si, Gyeonggi-do 16677 (KR); GIL, Yeongjin, Suwon-si, Gyeonggi-do 16677 (KR); SEO, Sungjong, Suwon-si, Gyeonggi-do 16677 (KR); LEE, Woojoong, Suwon-si, Gyeonggi-do 16677 (KR)
(74) Representative: Walaski, Jan Filip
(86) International application number: PCT/KR2023/018674
(87) International publication number: WO 2024/112034

(57) **Abstract**

This electronic device may comprise: a memory including a first area and a second area separated by a partition; and a processor. The processor writes files of an application on the memory in response to a file input request of the application, determines whether the files are pinned files, classifies the files as either hot files or cold files according to a write pattern of the files on the basis that the files are not pinned files, stores pinned files and cold files in the first area of which the size is fixed and stores hot files in the second area of which the size can vary, determines, on the basis that the available space in the first area is less than a designated level, files of which allocated block addresses can be changed from among the files stored in the first area, moves, from the first area to the second area, the files of which block addresses can be changed, and can store the pinned files on the space of the first area, generated by the movement of the files of which the block addresses can be changed.

## Description

### [Technical Field]

Various embodiments of this document relate to an electronic device including a memory and a file system operating method of the electronic device.

### [Background Art]

Recently developed electronic devices, such as a smart phone, a tablet PC, a portable multimedia player (PMP), personal digital assistant (PDA), a laptop personal computer, and a wearable device, may perform various functions (e.g., game, social network service (SNS), the Internet, multimedia, and photo and video shooting and execution) as well as mobility.

The electronic device may include a storage device such as a NAND flash memory or a solid state disk (SSD) to store a large amount of data required to perform various functions.

The electronic device may write at least a part of data of an application to a main memory using a file system, which is a type of program module or software that may be executed by a processor. In addition, the electronic device may classify a type of files to be written using the file system at the time of writing the data of the application to the main memory and control the classified files to be separately stored in the memory.

### [Disclosure of Invention]

### [Technical Solution]

The file system may support a partition shrink operation to generate a new partition or expand a space of other partitions. The file system may require as much available space as the reclaimed space to shrink the partition. When shrinking the partition, the file system should move data blocks in an area being shrunk to an area that is not being shrunk, which may incur costs.

Since some applications do not want to change block addresses of files, the file system may support files with a specific attribute (e.g., pinned attribute) file that cannot move the block address after block allocation. When pinned files are stored in the area being shrunk (or reclaimed), block movement of the files may occur when shrinking the partition, so the application cannot access the pinned attribute files.

An electronic device may include a memory including a first area and a second area separated by a partition and a processor. The processor may write files of an application to the memory in response to a file input request of the application, determine whether the files are pinned files, classify the files as either hot files or cold files according to write patterns of the files on the basis that the files are not the pinned files, store the pinned files and the cold files in the first area of which the size is fixed and store the hot files in the second area of which the size varies, determine, on the basis that an available space in the first area is less than a designated level, files of which the allocated block addresses can be changed from among the files stored in the first area, and move, from the first area to the second area, the files of which the block addresses can be changed and store the pinned files in a space in the first area generated by the movement of the files of which the block addresses are changeable.

A recording medium may include a memory and a processor. The memory may store instructions that, when executed, cause the processor to write files of an application on the memory in response to a file input request of the application, determine whether the files are pinned files and classifying the files as either hot files or cold files according to write patterns of the files based on that the files are not the pinned files, store the pinned files and the cold files in the first area of which the size is fixed and store the hot files in the second area of which the size varies, determine, based on the identification that there is no available space in the first area, files of which the allocated block addresses are changeable from among the files stored in the first area, and move, from the first area to the second area, the files of which the block addresses are changeable and store the pinned files in a space in the first area, generated by the movement of the files of which the block addresses can be changed.

An electronic device according to various embodiments of the present invention can reduce block movement cost that occurs when shrinking a partition in a partition-shrinkable file system and safely store a specific attribute (e.g., pinned attribute) file.

### [Brief Description of Drawings]

FIG. 1 is a block diagram of an electronic device in a network environment according to an embodiment.
FIG. 2 is a diagram illustrating a file classification operation of the electronic device according to an embodiment.
FIG. 3 is a block diagram illustrating a configuration of the electronic device according to an embodiment.
FIG. 4A is a diagram illustrating a situation of shrinking a partition on a file system according to an embodiment.
FIG. 4B is a diagram illustrating a file system of the electronic device according to an embodiment.
FIG. 5 is a diagram illustrating a situation of allocating a file block on the file system of the electronic device according to an embodiment.
FIG. 6 is a diagram illustrating a situation of removing the file block on the file system of the electronic device according to an embodiment.
FIG. 7 is a flowchart of a file system operating method of the electronic device according to an embodiment.

### [Mode for the Invention]

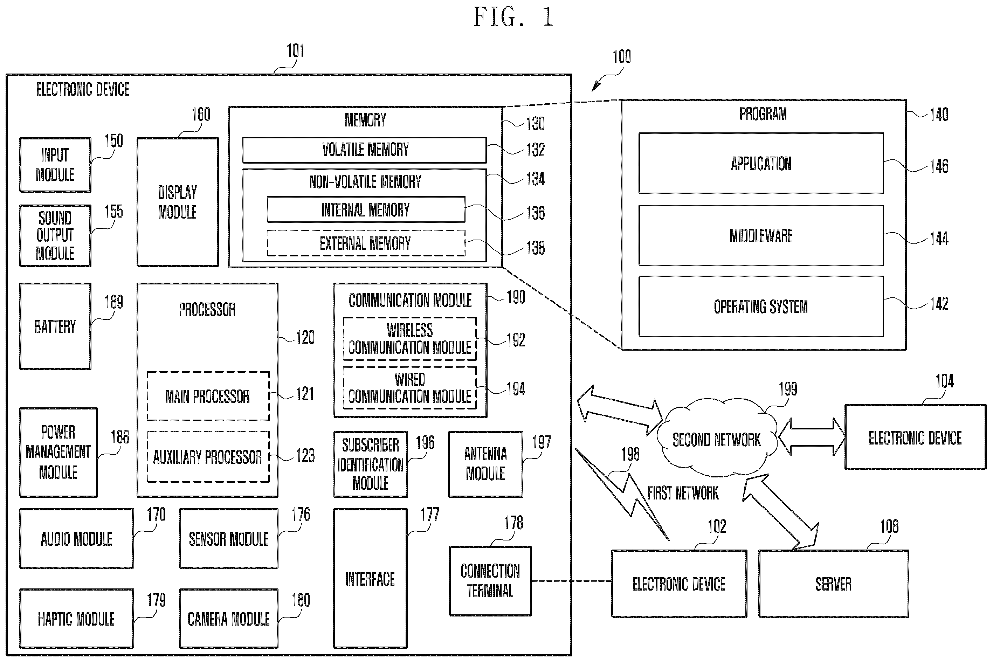

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

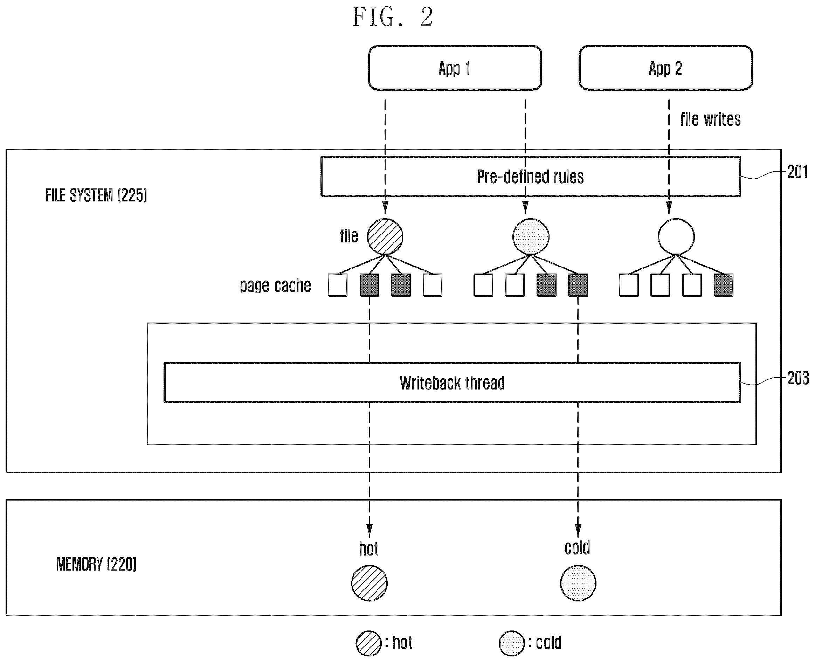

FIG. 2 illustrates a file classification operation of the electronic device according to an embodiment.

The electronic device (e.g., the electronic device 101 of FIG. 1) may include a processor (e.g., the processor 120 of FIG. 1) and a memory 220. The processor 120 may classify and store files in the memory 220 in response to a file write request of at least one application. In this case, the processor 120 may classify files as either hot files or cold files according to pre-defined rules 201 on a file system 225 in the memory 220. The hot files may mean files that are relatively frequently modified and/or deleted compared to the cold files. The cold files may mean files that are relatively infrequently modified and/or deleted compared to the hot files. The hot file may include, for example, DB, xml files, and the cold file may include, for example, media files such as photo and video. The pre-defined rules 201 may include at least one of a rule set according to a method of predicting the possibility that files will be changed based on, for example, file extensions (.xml, .db, jpg, .mp4, etc.), a rule set according to a method of predicting the possibility that files will be changed based on directory characteristics specified for each OS, or a rule set according to a method of predicting the possibility that files will be changed based on a block write size, etc.

The file system 225 may mean a program module (e.g., the program module 140 of FIG. 1) that may be executed by the processor 120. The electronic device may separately store a plurality of files in the memory 220 using the file system 225.

The processor 120 may identify whether the file classification information and the file data on the application match the file data stored in the memory 220 using a writeback thread 203 of the file system 225, and when the file data in the memory 220 does not match the file data on the application, control to perform the writeback.

The writeback may mean an operation of updating only a cache of the memory 220 when writing the file data. In other words, the processor 120 may control to update only the cache when writing the file data, and write the file data to a main memory device or an auxiliary memory device including the memory 320 only when necessary.

The electronic device 101 may use a write pattern of at least a part of a time period between the time when the files are written to a page cache in the memory 220 and the time when the files are stored in the memory 220 to separately store files (hot files) that are frequently modified and deleted and files (cold files) that are infrequently changed after storage.

The electronic device 101 may classify the type of files using the file system 225 and separately store the files in the memory 220.

The electronic device 101 may use the write pattern from the time when the files are written to the page cache to the time when the files are stored in the storage to separately store the files (hot files) that are frequently modified and deleted and the files (cold files) that are infrequently changed after the file storage.

The technology for separately storing the hot files and the cold files are being handled by various methods in the fields of the memory 220 and the file system 225. The reason is that, when separately storing the hot files and the cold files, the NAND storage or the file system may refer to the information to minimize a garbage collection operation, or when storing the cold files with a relatively larger size compared to the hot files, data blocks are continuously stored to minimize fragmentation, thereby optimizing the file storage performance and the NAND storage lifespan.

In addition, the electronic device 101 may support some files (e.g., pinned files) with file attributes of which the block movement is impossible. An application may manage a location where file data blocks are stored within the application. The application may directly transmit read and write requests to a block address of a storage device without going through the file system for the read and write requests of the data block. When the data block addresses of the pinned files are arbitrarily changed on the file system 225, a problem of accessing an incorrect data address on the application may occur. To prevent this problem, the electronic device 101 may store the pinned files in a space where the pinned files are not reclaimed and control the data block addresses of the pinned files not to be arbitrarily changed on the file system 225.

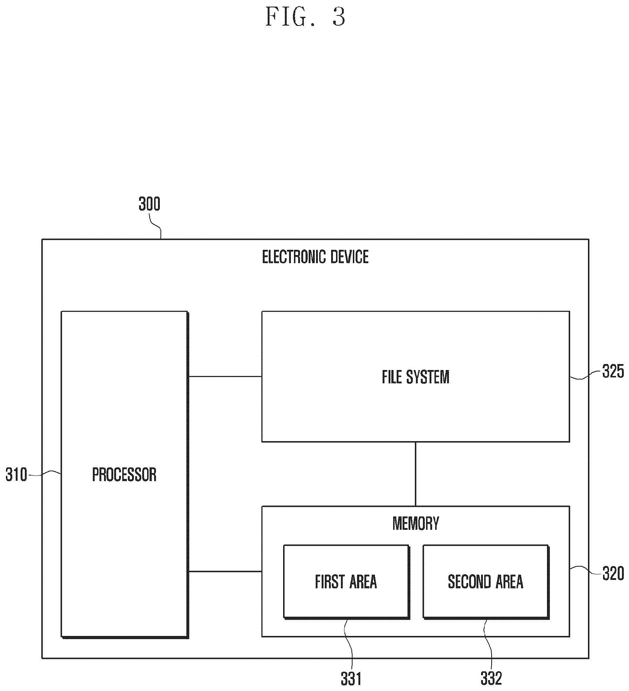

FIG. 3 is a block diagram illustrating a configuration of the electronic device according to an embodiment.

Referring to FIG. 3, an electronic device 300 may include a processor 310 and a memory 320, and some of the illustrated components may be omitted or substituted. The electronic device 300 may further include at least some of the components and/or functions of the electronic device 101 of FIG. 1. At least some of the components of the illustrated (or not illustrated) electronic device may be operatively, functionally, and/or electrically connected to each other.

According to an embodiment, the processor 310 is a component capable of performing calculations or data processing related to control and/or communication of each component of the electronic device 300, and may be composed of one or more processors. The processor 310 may include at least some of the components and/or functions of the processor 120 of FIG. 1.

According to an embodiment, the calculation and data processing functions that may be implemented by the processor 310 on the electronic device 300 are not limited. Hereinafter, however, characteristics related to the control of the file system 325 in the memory 320 will be described in detail. The operations of the processor 310 may be performed by loading the instructions stored in the memory 320 (e.g., the memory 130 of FIG. 1). The file system 325 structure may mean a structure for storing or organizing files or data so that the electronic device 300 may easily discover and access the files or data. The file system 325 according to an embodiment of the present document may configure the file system structure to store and manage files and directories in the memory 320.

At least one memory 320 may include the volatile memory 132 of FIG. 1, and may also include the nonvolatile memory 134 of FIG. 1. The memory 320 may include a volatile memory such as a dynamic random access memory (DRAM), a static RAM (SRAM), or a synchronous dynamic RAM (SDRAM). The memory 320 may include at least one of one time programmable ROM (OTPROM), PROM, EPROM, EEPROM, mask ROM, flash memory, hard drive, or solid state drive (SSD). Alternatively, the memory 320 is the non-volatile memory and may include a large capacity storage device. For example, the memory 320 may include at least one of one time programmable ROM (OTPROM), PROM, EPROM, EEPROM, mask ROM, flash ROM, hard drive, or solid state drive (SSD). The memory 320 may store various file data, and the stored file data may be updated according to the operation of the processor 310.

According to an embodiment, the file system 325 may mean a system that can be used by intercepting a system call at a kernel level without a separate daemon. The daemon may mean a background process that is executed when the system is first operated. The file system 325 may wait for the user's request while the daemon is stored in the memory 320 and then recognize the user's request when the user's request occurs.

According to an embodiment, the file system 325 may provide files in response to a request from an application layer. The file system 325 may be located on a kernel layer. The operation of providing the files may mean an operation of opening and reading the requested files or reading the already open files to transmit the read open files to the application layer. The operation of opening the files may mean an operation of finding names of the files in the storage device and preparing to read and/or write the files in the application layer. The operation of reading the files may mean an operation of loading the open file data into the memory 320. The loading may mean an operation of fetching a program itself and resources necessary for the operation from the auxiliary memory device (e.g., hard disk) to the main memory device (e.g., memory).

According to an embodiment, the file system 325 may read the requested file and provide the files to the application layer in response to the request of the application layer when the requested file exists on an upper file system in the memory 320, and read the files on the nonvolatile memory and provide the files to the application layer when the requested files do not exist on the upper file system.

According to an embodiment, the processor 310 may execute various types of software (e.g., the program 140). The memory 320 may include the file system 325. The file system 325 is a program module stored in the memory 320 and may be operated by the processor 310.

According to an embodiment, the processor 310 may store data in the form of the files in the memory 320 through the file system 325. The file system 325 may mean a data structure or system that the processor 310 manages to store data in the memory 320. The electronic device 300 may use the file system 325 to write data to the memory 320 or efficiently read the data stored in the memory 320. In an embodiment, the file system 325 is described assuming that the file system 325 is implemented as a flash friendly file system (F2FS), but the form of the file system 325 is not limited to the F2FS, and may include other forms of file systems. The F2FS may mean a file system optimized for a NAND flash memory based on log-based storage.

According to an embodiment, the memory 320 may include a first area 331 in which a first file or the cold files are stored. In addition, the memory 320 may include a second area 332 in which a second file or the hot files are stored. The first file or the cold files may mean files that are relatively infrequently modified and/or deleted compared to the hot files. The second file or the hot files may mean files that are relatively frequently modified and/or deleted compared to the cold files.

According to an embodiment, the file system 325 may include a writeback thread module (e.g., the writeback thread module 203 of FIG. 2). The writeback thread module 203 may detect a request from an application to write files to the file system 325 and monitor key characteristics (hereinafter referred to as a "write pattern' or 'first pattern') of the write operation. The writeback thread module 203 may temporarily store the write pattern of the file being monitored in a file object (not illustrated) in the memory 320. The write pattern may include at least one of the file size, whether the files are modified (dirty page), a time (modification time) when the files are modified, a time interval (modification interval) at which the files are modified, a count (fsync) with which the system calls the files, a size (chunk size) of a portion being modified on the files, extensions of the files, directory names in which the files are stored, and whether a specific file system is used.

According to an embodiment, features of the write patterns of the files may include at least one of an overwrite count, an append count, a write chunk, or a system call count (fsync).

The overwrite count may mean the number of times some of the files are modified in the middle. For example, the processor 310 may classify the files as the overwrite count when storing the files in the case where some cells in an Excel file are modified. When the overwrite count of the files is relatively large, the processor 310 may determine that the files are frequently modified and classify the files as being close to the hot files.

The append count may mean the number of times other data is newly added to the existing files. For example, the processor 310 may classify files as the append count when storing the files in the case where new data is added beyond the level of the files being partially modified in a jpg file. When the append count of the files is relatively large, the processor 310 may determine that new contents are often added to the files and may classify the files as being close to the cold files.

The write chunk may mean a file size unit stored in an operation of writing the files to the memory 320. For example, when the write chunk is relatively small, the processor 310 may determine that a small number of writes are performed in a one-time write operation and classify the files as being close to the hot files. Conversely, when the write chunk is relatively large, the processor 310 may determine that a large number of writes are performed in a one-time write operation and classify the files as being close to the cold files.

The system call count (fsync) may mean the number of times the files recorded in the cache of the memory 320 are written to the non-volatile memory. For example, when the fsync is lower than a designated value, the processor 310 may determine that the files recorded in the memory 320 are files that are written relatively less frequently. In other words, when the fsync is lower than the designated value, the processor 310 may classify the files as the cold files that are infrequently modified. Conversely, when the fsync is higher than the designated value, the processor 310 may classify the files as the hot files that are relatively frequently modified.

According to an embodiment, the processor 310 may classify whether specific files are the hot files or the cold files based on the features of at least one write pattern described above.

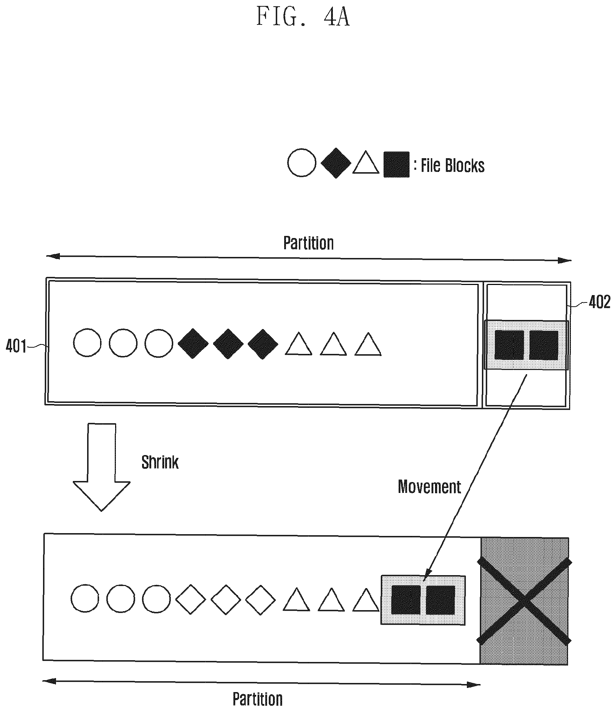

FIG. 4A is a diagram illustrating a situation of shrinking a partition on the file system.

Referring to FIG. 4A, the electronic device (e.g., the electronic device 300 of FIG. 3) may support some files (e.g., pinned files) with the file attribute of which the block movement is impossible. The electronic device 300 may divide an area on the memory (e.g., the memory 320 of FIG. 3) and store files in different areas according to their attributes. A first area (e.g., the first area 331 of FIG. 3) 401 and a second area (e.g., the second area 332 of FIG. 3) 402 may be divided by a partition on the memory 320. According to an embodiment, the electronic device 300 may generate a new partition or support a shrink operation of some partitions to expand spaces of other partitions. The electronic device 300 may reclaim some areas (e.g., the second area 402) to shrink the partition. The reclaimed space (e.g., the second area 402) needs to be an available space where the files are not stored. The files stored in the reclaimed space (e.g., the second area 402) may be deleted after the reclamation operation of the electronic device 300. The electronic device 300 may move the files stored in the reclaimed space (e.g., the second area 402) to the non-reclaimed space (e.g., the first area 401) to prevent necessary files from being deleted or lost. The movement of the files may incur costs, and when the number of files moved increases, the files are deleted during the movement of the files or are left in the space that is reclaimed without being moved, so the number of files being deleted may increase.

The electronic device 300 and the file system operating method of the electronic device 300 according to an embodiment of the present invention may reduce the number of files stored in the reclaimed space (e.g., the second area 402) when shrinking the partition, and reduce costs due to the movement of the files. In addition, the electronic device 300 according to an embodiment of the present invention may mainly arrange the files (e.g., the hot files) expected to be deleted soon according to the file attribute in the reclaimed space (e.g., the second area 402), and control the data loss to be minimized even if there are the files that are left in the reclaimed space and deleted. Hereinafter, the file system operating method of the electronic device for minimizing the costs and data loss due to the movement of the files will be described.

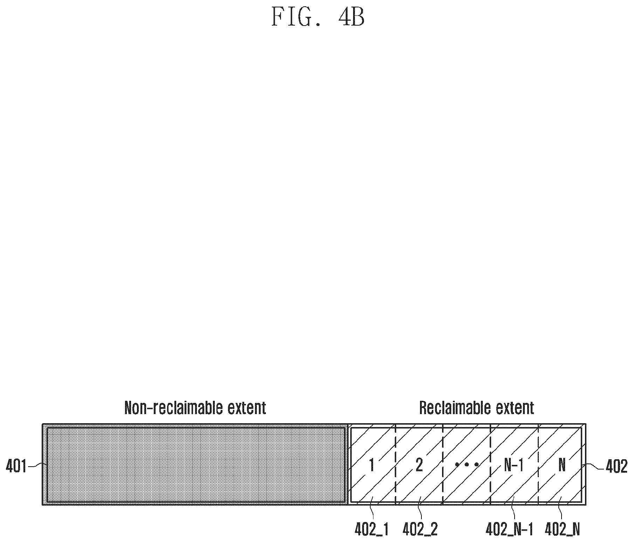

FIG. 4B is a diagram illustrating the file system of the electronic device according to an embodiment.

The first area 401 may mean a non-reclaimable extent when shrinking the partition. The processor (e.g., the processor 310 of FIG. 3) may preferentially store the pinned files and the cold files in the first area 401. The pinned files may mean the files with the file attributes of which the block movement is impossible. The cold files may mean the files that are relatively infrequently modified and/or deleted compared to the hot files. The cold file may include, for example, media files such as photo and video. This is only an example, and the type of cold files is not limited thereto, and the cold files may include any file that is infrequently modified and/or deleted.

The memory 320 may include the non-reclaimable first area 401 and the reclaimable second area 402. The second area 402 may further include a plurality (e.g., N) of areas 402_1, 402_2, ..., 402_N-1, and 402_N. The areas 402_1, 402_2, ..., 402_N-1, and 402_N within the second area 402 may have priorities in terms of the reclamation. For example, when shrinking the partition, the 2-Nth area 402_N may be reclaimed first, and the 2-1th area 402_1 may be reclaimed last. The number or priority of areas within a reclaimable extent is not fixed and may vary depending on the settings.

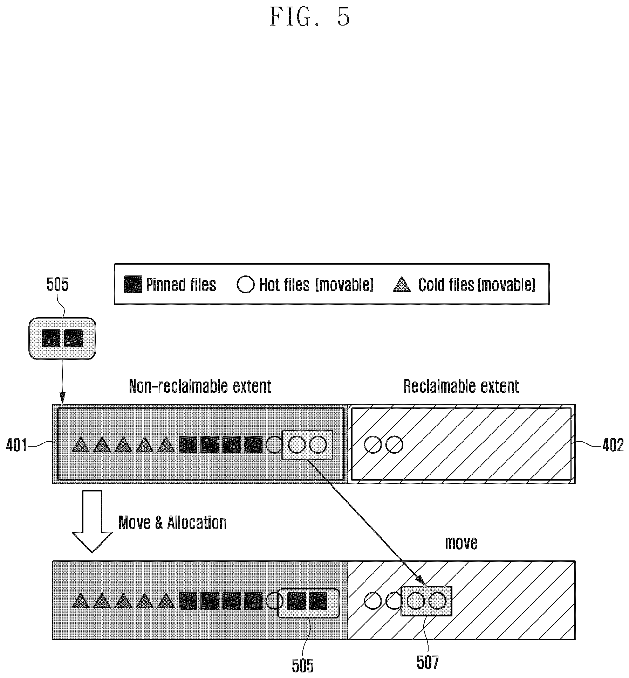

FIG. 5 is a diagram illustrating a situation of allocating a file block on the file system of the electronic device according to an embodiment.

The processor (e.g., the processor 310 of FIG. 3) may receive a write request for pinned files 505 from an application and store the pinned files 505 in the memory (e.g., the memory 320 of FIG. 3). Since the pinned files 505 have the file attributes of which the block movement is impossible, the processor 310 may allocate the pinned files to the non-reclaimable first area 401. The processor 310 may allocate the pinned files 505 to the non-reclaimable first area 401, thereby reducing costs due to the movement of the files and preventing the loss of the pinned files 505 that may occur during the movement of the files. The application may designate specific files as the pinned files based on the need for the attributes of the pinned files.

According to an embodiment, the processor 310 may identify whether there is a sufficient space to store the pinned files 505 in the first area 401. Based on the determination that there is the insufficient space to store the pinned files 505 in the first area 401, the processor 310 may move some files stored in the first area 401 to the second area 402 to secure the storage space. The second area 402 means a reclaimable area in the operation of shrinking the partition. The processor 310 may move the hot files 507, which are relatively frequently modified and/or deleted compared to the cold files, to the second area 402. The processor 310 may store the pinned files 505 in the space generated while moving the hot files on the first area 401.

According to an embodiment, the processor 310 may identify whether the files are stored in the second area 402 based on receiving, from the application, a signal indicating that the file block stored in the memory 320 has the attributes corresponding to the pinned files 505. The processor 310 may move the files to the first area 401 and designate the attributes corresponding to the pinned files 505 based on identifying that the files are stored in the second area 402. When the files stored in the reclaimable second area 402 are changed to have the attributes of the pinned files, the processor 310 may move the files to the first area 401 in the operation of reclaiming the partition later. In this case, since the movement of the files incur costs and poses a risk of the file loss, the processor 310 may move the files to the first area 401 in advance and designate the attributes corresponding to the pinned files 505.

According to an embodiment, the processor 310 may preferentially store the hot files in the second area 402, and store the hot files in the first area 401 based on the insufficient storage space in the second area 402.

According to an embodiment, unlike the first area 401, the second area 402 may experience the area shrink due to the partition shrink. In the process of shrinking the second area 402, the movement or deletion of the files may occur. It may be advantageous for the processor 310 not to store the files in the second area 402 as much as possible in terms of reducing costs or the risk of the file loss. For this reason, the processor 310 may store files of all attributes in the first area 401 until the available space in the first area 401 becomes less than the designated level (e.g., 20%), and allocate some files (e.g., the hot files 507) with attributes to the second area 402 on the basis that the available space in the first area 401 becomes less than the designated level. The designated level (e.g., 20%) is only an example and is not fixed, and may vary according to the settings.

According to an embodiment, the processor 310 may preferentially store the cold files in the first area 401, and store the cold files in the second area 402 based on the insufficient storage space in the first area 401.

The processor 310 may store the pinned files 505 in the first area 401, move at least some of the hot files 507 stored in the first area 401 to the second area 402 based on the insufficient storage space in the first area 401, and store the pinned files 505 in the space in the first area 401 in which the hot files 507 are stored.

The processor 310 may identify whether there is no hot files stored in the first area 401 or whether there is the insufficient available space to store the pinned files 505 in the first area 401 even after moving the hot files 507 stored in the first area 401, move at least some of the cold files stored in the first area 401 to the second area 402 based on the insufficient available space to store the pinned files 505 in the first area 401, and store the pinned files 505 in the space on the first area 401 in which the cold files are stored.

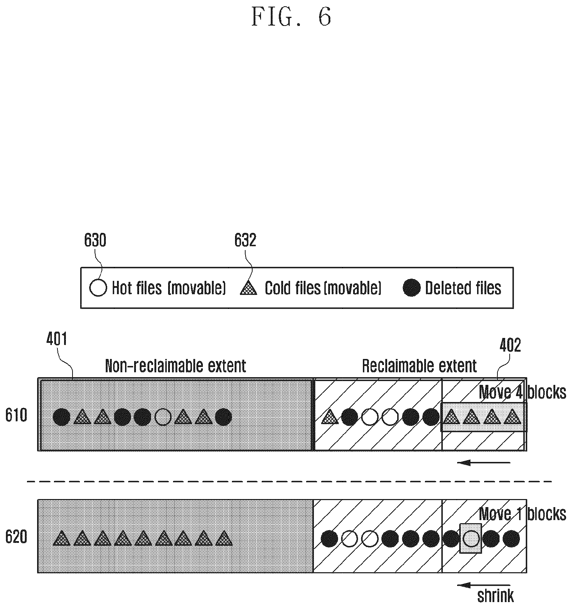

FIG. 6 is a diagram illustrating a situation of removing the file block on the file system of the electronic device according to an embodiment.

Figure 610 illustrates a situation in which files (e.g., hot files 630 and cold files 632) are stored without dividing between the non-reclaimable first area 401 and the reclaimable second area 402. In the figure 610, the cold files 632 may be stored in an area with a high reclamation priority on the second area 402. In this case, the cold files 632 on the area being shrunk may be deleted in the partition shrink situation. The processor (e.g., the processor 310 of FIG. 3) may move the cold files 632 to the non-reclaimed first area 401 to prevent the deletion of the cold files 632. Costs may be incurred during the movement of the files. In addition, some or all of the cold files 632 being moved may be lost in the situation where the available space in the first area 401 is insufficient.

The electronic device (e.g., the electronic device 300 of FIG. 3) and the file system operating method of the electronic device 300 according to an embodiment of the present invention may reduce costs and the risk of file loss during the movement of the files. This will be described in figure 620. In the figure 620, the processor 330 may classify the files based on the file attributes, and control cold files 632 to be stored in the first area 401 and hot files 630 to be stored in the second area 402. The electronic device 300 according to an embodiment of the present invention may control the files not to be stored in the reclaimable second area 402, or control the hot files 630, which have a high probability of being deleted or invalidated within a short period of time, to be stored. When shrinking the partition, only valid files (or file blocks) may be a movement target. The valid files may include, for example, the cold files 632 or the pinned files (e.g., the pinned files 505 of FIG. 5). The electronic device 300 according to an embodiment of the present invention may control not to store the cold files 632 or the pinned files 505 in the second area 402. Compared to the figure 610, the electronic device 300 according to an embodiment of the present invention may store only invalid files (e.g., the hot files 630), which are not file move targets, in the second area 402 to reduce can reduce the number of files (or the number of file blocks) moved when shrinking the partition.

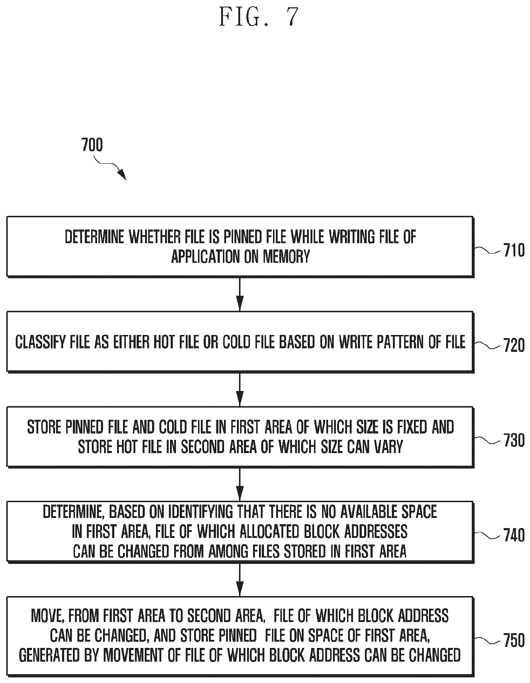

FIG. 7 is a flowchart of a file system operating method of the electronic device according to an embodiment.

The operations described with reference to FIG. 7 may be implemented based on instructions that may be stored in a computer recording medium or a memory (e.g., the memory 320 of FIG. 3). An illustrated method 700 may be executed by the electronic device (e.g., the electronic device 300 of FIG. 3) described with reference to FIGS. 1 to 6 above, and the technical features described above will be omitted below. The order of each operation of FIG. 7 may be changed, some operations may be omitted, and some operations may be performed simultaneously.

In operation 710, the processor (e.g., the processor 310 of FIG. 3) may determine whether the files are the pinned file while writing the application file on the memory (e.g., the memory 320 of FIG. 3). The pinned files may mean the files with the file attributes of which the block movement is impossible. The application may designate the specific files as the pinned files based on the need for the attributes of the pinned files. The processor 310 may identify the attributes of the files to determine whether the files requested to be written to the application have the attributes of the pinned files.

In operation 720, the processor 310 may classify the files as either the hot files or the cold files according to the write patterns of the files. The processor 310 may classify the files as either the hot files or the cold files according to the write patterns of the files on the basis that the files requested to be written to the application do not have the attributes of the pinned files. The hot files may mean the files that are relatively frequently modified and/or deleted compared to the cold files. Alternatively, the cold files may mean the files that are relatively infrequently modified and/or deleted compared to the hot files. The write pattern may include at least one of the file size, whether the files are modified (dirty page), the time (modification time) when the files are modified, the time interval (modification interval) at which the files are modified, the count (fsync) with which the system calls the files, the size (chunk size) of a portion being modified on the files, the extensions of the files, the directory names in which the files are stored, and whether the specific file system is used. According to an embodiment, the features of the write patterns of the files may include at least one of the overwrite count, the append count, the write chunk, or the system call count (fsync).

The overwrite count may mean the number of times some of the files are modified in the middle. For example, the processor 310 may classify the files as the overwrite count when storing the files in the case where some cells in the Excel file are modified. When the overwrite count of the files is relatively large, the processor 310 may determine that the files are frequently modified and classify the files as being close to the hot files.

The append count may mean the number of times other data is newly added to the existing files. For example, the processor 310 may classify the files as the append count when storing the files in the case where new data is added beyond the level of the files being partially modified in the jpg file. When the append count of the files is relatively large, the processor 310 may determine that new contents are often added to the files and may classify the files as being close to the cold files.

The write chunk may mean the file size unit stored in the operation of writing the files to the memory 320. For example, when the write chunk is relatively small, the processor 310 may determine that a small number of writes are performed in a one-time write operation and classify the files as being close to the hot files. Conversely, when the write chunk is relatively large, the processor 310 may determine that a large number of writes are performed in a one-time write operation and classify the files as being close to the cold files.

The system call count (fsync) may mean the number of times the files recorded in the cache of the memory 320 are written to the non-volatile memory. For example, when the fsync is relatively low, the processor 310 may determine that the files recorded in the cache of the memory 320 are the files that are written relatively few times. That is, when the fsync is relatively low, the processor 310 may determine that the files are infrequently modified and classify the files as being close to the cold files. Conversely, when the fsync is relatively high, the processor 310 may determine that the files are relatively frequently modified and classify the files as being close to the hot files. When the fsync is less than a first level, the processor 310 may determine that the files are infrequently modified and classify the files as being close to the cold files. For example, when the fsync is less than 3, the processor 310 may determine that the files are infrequently modified and classify the files as being close to the cold files. In this case, the value or the first level of the fsync may not be limited thereto, and may be determined by developer's settings or may be determined by training multiple files through machine learning.

According to an embodiment, the processor 310 may classify whether the specific files are the hot files or the cold files based on the features of at least one write pattern described above.

In operation 730, the processor 310 may store the pinned files and the cold files in the first area (e.g., the first area 401 of FIG. 4A) of which the size is fixed, and store the hot files in the second area (e.g., the second area 402 of FIG. 4A) of which the size may vary. The first area 401 may mean a non-reclaimable extent when shrinking the partition. The processor (e.g., the processor 310 of FIG. 3) may preferentially store the pinned files and the cold files in the first area 401. The cold file may include, for example, media files such as photo and video. This is only an example, and the type of cold files is not limited thereto, and the cold files may include any file that is infrequently modified and/or deleted.

According to an embodiment, the processor 310 may preferentially store the hot files in the second area 402, and store the hot files in the first area 401 based on the insufficient storage space in the second area 402.

In operation 740, the processor 310 may determine the files of which the allocated block address can be changed among the files stored in the first area 401 based on identifying that there is no available space in the first area 401.

According to an embodiment, unlike the first area 401, the second area 402 may experience the area shrink due to the partition shrink. In the process of shrinking the second area 402, the movement or deletion of the files may occur. It may be advantageous for the processor 310 not to store the files in the second area 402 as much as possible in terms of reducing costs or the risk of the file loss. For this reason, the processor 310 may store files of all attributes in the first area 401 until the available space in the first area 401 becomes less than the designated level (e.g., 20%), and allocate some files (e.g., the hot files) with attributes to the second area 402 on the basis that the available space in the first area 401 becomes less than the designated level. The designated level (e.g., 20%) is only an example and is not fixed, and may vary according to the settings.

According to an embodiment, based on the determination that there is the insufficient space to store the pinned files in the first area 401, the processor 310 may move some files stored in the first area 401 to the second area 402 to secure the storage space. The second area 402 means the reclaimable area in the operation of shrinking the partition. The processor 310 may move the hot files, which are relatively frequently modified and/or deleted compared to the cold files, to the second area 402.

In operation 750, the processor 310 may move the files of which the block addresses can be changed from the first area to the second area, and store the pinned files in the space in the first area, generated by the movement of the files of which the block addresses can be changed. The processor 310 may store the pinned files 505 in the space generated while moving the hot files on the first area 401.

The electronic device may include the memory including the first area and the second area separated by the partition and the processor. The processor may write the files of the application to the memory in response to the file input request of the application, determine whether the files are the pinned files, classify the files as either the hot files or the cold files according to the write patterns of the files on the basis that the files are not the pinned files, store the pinned files and the cold files in the first area of which the size is fixed and store the hot files in the second area of which the size varies, determine, on the basis that the available space in the first area is less than the designated level, the files of which the allocated block addresses can be changed from among the files stored in the first area, and move, from the first area to the second area, the files of which the block addresses can be changed and store the pinned files in the space in the first area, generated by the movement of the files of which the block addresses can be changed.

The hot files are the files that are frequently modified and/or deleted compared to the cold files, the cold files are the files that are infrequently modified and/or deleted compared to the hot files, the pinned files means the files of which the allocated block addresses cannot be changed, and the processor may identify whether the files are stored in the second area based on receiving the signal from the application indicating that the file block stored in the memory has the attributes corresponding to the pinned files, move the files to the first area based on identifying that the files are stored in the second area, and designate the attributes corresponding to the pinned files.

The processor may preferentially store the hot files in the second area, and store the hot files in the first area based on the insufficient storage space in the second area.The processor may preferentially store the cold files in the first area, and store the cold files in the second area based on the insufficient storage space in the second area.

The processor may store the pinned files in the first area, and move at least some of the hot files stored in the first area to the second area based on the insufficient storage space in the first area, and store the pinned files in the space in the first area in which the hot files are stored.

The processor may identify whether there is no hot files stored in the first area or whether there is the insufficient available space to store the pinned files in the first area even after moving the hot files stored in the first area, move, based on the insufficient available space to store the pinned files in the first area, at least some of the cold files stored in the first area to the second area, and store the pinned files in the space in the first area in which the cold files are stored.

The hot files may include temporary storage files or cache files, and the cold files may include multimedia files or application executable files.

The processor may store all the files of the attributes in the first area on the basis that the size of the available space in the first area exceeds the designated level, and store the hot files in the second area on the basis that the size of the available space in the first area is less than the designated level.

The write pattern may include at least one of the file size, whether the files are modified (dirty page), the time (modification time) when the files are modified, the time interval (modification interval) at which the files are modified, the count (fsync) with which the system calls the files, the size (chunk size) of a portion being modified on the files, the extensions of the files, the directory names in which the files are stored, and whether the specific file system is used.

The write pattern may include the overwrite count which means the number of times some of the files are modified in the middle, and when the overwrite count of the files is relatively large, the processor may determine that the files are frequently modified and classify the files as being close to the hot files, and when the overwrite count of the files is relatively small, the processor may determine that the number of times the files are modified is small and classify the files as being close to the cold files.

The embodiments of the present document disclosed in this specification and drawings present merely specific examples to easily describe the technical contents according to the embodiments of the present document and to help understand the embodiments of the present document, and are not intended to limit the scope of the embodiments of the present document. Therefore, the scope of an embodiment of this document should be interpreted as including all changes or modifications derived based on the technical idea of an embodiment of this document in addition to the embodiments disclosed herein.

## Claims

1. An electronic device, comprising:
a memory including a first area and a second area separated by a partition; and
a processor,
wherein the processor writes files of an application to the memory in response to a file input request of the application,
determines whether the files are pinned files,
classifies the files as either hot files or cold files according to write patterns of the files based on that the files are not the pinned files,
stores the pinned files and the cold files in the first area of which the size is fixed and stores the hot files in the second area of which the size varies,
determines, based on that an available space in the first area is less than a designated level, files of which the allocated block addresses are changeable from among the files stored in the first area, and
moves, from the first area to the second area, the files of which the block addresses are changeable and stores the pinned files in a space in the first area, generated by the movement of the files of which the block addresses are changeable.

2. The electronic device of claim 1, wherein the hot file is a file that is frequently modified and/or deleted compared to the cold file, the cold file is a file that is infrequently modified and/or deleted compared to the hot file, and the pinned file indicates a file of which the allocated block address is unchangeable, and
the processor identifies whether the file is stored in the second area based on receiving, from the application, a signal indicating that a file block stored in the memory has an attribute corresponding to the pinned file, and
moves the file to the first area based on identifying that the file is stored in the second area and designates the attribute corresponding to the pinned file.

3. The electronic device of claim 1, wherein the processor preferentially stores the hot file in the second area, and stores the hot file in the first area based on an insufficient storage space in the second area.

4. The electronic device of claim 1, wherein the processor preferentially stores the cold file in the first area, and
stores the cold file in the second area based on an insufficient storage space in the first area.

5. The electronic device of claim 1, wherein the processor stores the pinned file in the first area, and
moves at least some of the hot files stored in the first area to the second area based on an insufficient storage space in the first area, and stores the pinned files in the space in the first area in which the hot files are stored.

6. The electronic device of claim 5, wherein the processor identifies whether there is no hot file stored in the first area or whether there is the insufficient available space to store the pinned files in the first area even after moving the hot file stored in the first area, and
moves at least some of the cold files stored in the first area to the second area based on the insufficient available space to store the pinned files in the first area, and stores the pinned files in the space in the first area in which the cold files are stored.

7. The electronic device of claim 1, wherein the hot file includes a temporary storage file or a cache file, and
the cold file includes a multimedia file or an application execution file.

8. The electronic device of claim 1, wherein the processor stores all files of attributes in the first area based on that the size of the available space in the first area exceeds the designated level, and
stores the hot file in the second area based on that the size of the available space in the first area is less than the designated level.

9. The electronic device of claim 1, wherein the write pattern includes at least one of the file size, whether the file is modified (dirty page), a time (modification time) when the file is modified, a time interval (modification interval) at which the file is modified, a count (fsync) with which the system calls the file, a size (chunk size) of a portion being modified on the file, an extension of the file, a directory name in which the file is stored, and whether a specific file system is used.

10. The electronic device of claim 9, wherein the write pattern includes an overwrite count indicating the number of times a portion of a file is modified in the middle,
the processor determines that the number of times the file is modified is frequent when the overwrite count of the file is relatively large, and classifies the file as being close to the hot file, and
determines that the number of times the file is modified is small when the overwrite count of the file is relatively small, and classifies the file as being close to the cold file.

11. A recording medium, comprising:
a memory; and
a processor,
wherein the memory stores instructions that, when executed, cause the processor to
write files of an application to the memory in response to a file input request of the application;
determine whether the files are pinned files and classify the files as either hot files or cold files according to write patterns of the files based on that the files are not the pinned files;
store the pinned files and the cold files in the first area of which the size is fixed and store the hot files in the second area of which the size varies;
determine, based on identifying that there is no available space in the first area, files of which the allocated block addresses are changeable from among the files stored in the first area; and
move, from the first area to the second area, the files of which the block addresses are changeable and store the pinned files in a space in the first area generated by the movement of the files of which the block addresses are changeable.

12. The recording medium of claim 11, wherein the hot file is a file that is frequently modified and/or deleted compared to the cold file, the cold file is a file that is infrequently modified and/or deleted compared to the hot file, and the pinned file indicates a file of which the allocated block address is unchangeable, and
the memory stores the instructions that, when executed, cause the processor to:
identify whether the file is stored in the second area based on receiving, from the application, a signal indicating that a file block stored in the memory has an attribute corresponding to the pinned file; and
move the file to the first area based on identifying that the file is stored in the second area and designates the attribute corresponding to the pinned file.

13. The recording medium of claim 11, wherein the memory stores the instructions that, when executed, cause the processor to preferentially store the hot file in the second area, and store the hot file in the first area based on an insufficient storage space in the second area.

14. The recording medium of claim 11, wherein the memory stores the instructions that, when executed, cause the processor to preferentially store the cold file in the first area, and store the cold file in the second area based on an insufficient storage space in the first area.

15. The recording medium of claim 11, wherein the memory stores the instructions that, when executed, cause the processor to move at least some of the hot files stored in the first area to the second area based on an insufficient storage space in the first area, and store the pinned files in the space in the first area in which the hot files are stored.
